(19) Europäisches Patentamt
European Patent Office
Office européen des brevets

(11) Veröffentlichungsnummer: **0 436 164 A1**

(12) **EUROPÄISCHE PATENTANMELDUNG**

(21) Anmeldenummer: **90124118.2**

(22) Anmeldetag: **13.12.90**

(51) Int. Cl.5: **B01D 33/073**, B01D 33/46, B01D 33/64

(30) Priorität: **19.12.89 DE 3941900**

(43) Veröffentlichungstag der Anmeldung:
**10.07.91 Patentblatt 91/28**

(84) Benannte Vertragsstaaten:
**CH DE DK FR GB IT LI NL**

(71) Anmelder: **SÜDTECH UMWELT-ANLAGENBAU GmbH**
**Dieselstrasse 1-3**
**W-8264 Waldkraiburg(DE)**

(72) Erfinder: **Oberbacher, Josef**
**Eschenweg 3**
**W-8261 Aschau(DE)**

(74) Vertreter: **Flach, Dieter Dipl.-Phys. et al**
**Patentanwälte Dipl.-Phys. Dieter Flach**
**Dipl.-Chem. Dr. Steffen Andrae Dipl.-Ing.**
**Dietmar Haug Dipl.-Chem. Dr. Richard**
**Kneissl Prinzregentenstrasse 24**
**W-8200 Rosenheim 24(DE)**

(54) **Flüssigkeits-Feststoff-Separator, insbesondere Gülleseparator.**

(57) Herkömmliche Flüssigkeits-Feststoff-Separatoren weisen den großen Nachteil auf, daß eine Demontage der eingebauten wie der Einbau einer neuen Siebtrommel äußerst arbeits- und zeitintensiv ist, da die gesamte Vorrichtung zerlegt werden muß.

Um demgegenüber einen verbesserten Flüssigkeits-Feststoff-Separator zu schaffen, bei dem eine Siebtrommel mit vergleichsweise geringem Arbeits- und Zeitaufwand ausgewechselt werden kann, ist vorgesehen, daß zumindest an der einen walzenstirnseitigen Gehäusewand (1') ein Gehäusewand-Zentralabschnitt (1'b) vorgesehen ist, der von dem verbleibenden Gehäusewandabschnitt (1'a) längs einer Trennlinie (30) trennbar und absenkbar ist. An diesem absenkbaren Gehäusewand-Zentralabschnitt (1'b) sind die inneren, die Siebtrommel (3) tragenden Druckwalzen (37) gelagert und mitabsenkbar, wozu diese an der gegenüberliegenden Gehäusestirnwand (1") über eine Pendelaufhängung gelagert sind. Der Gehäusewand-Zentralabschnitt (1'b) ist so geformt und gebildet, daß evtl. unter weiterer Entfernung zusätzlicher demontiertbarer Gehäusewandteile die Siebtrommel hierüber und über die daran gelagerten inneren Druckwalzen (37) abgezogen bzw. aufgeschoben werden kann.

Fig. 1

## FLÜSSIGKEITS-FESTSTOFF-SEPARATOR, INSBESONDERE GÜLLESEPARATOR

Die Erfindung betrifft einen Flüssigkeits-Feststoff-Separator, insbesondere Gülleseparator nach dem Oberbegriff des Anspruches 1.

Insbesondere im landwirtschaftlichen Bereich beim Anfall großer Güllemengen ist es wünschenswert, die anfallende Rohgülle im Hinblick auf die Flüssigkeiten und die darin enthaltenen Feststoffe zu trennen. Dies bietet Vorteile vor allem im Hinblick auf eine bessere Verteilung der Dünngülle auf dem Boden, eine gleichmäßige Verteilung der Nährstoffe sowie eine Sicherung höherer Erträge durch bessere Pflanzenverfügbarkeit der Nährstoffe. Darüber hinaus wird auch eine geringere Verschmutzung der Pflanzen beim Ausbringen der Gülle erzielt und eine Zerstörung der Grasnarbe durch Verfilzen der Feststoffanteile verhindert. Durch die Kompostierung der Feststoffe läßt sich schließlich ein hochwertiger Humusdünger erzielen, wobei auch eine exakte Feststoffverteilung leicht möglich wird. Schließlich handelt es sich dabei auch um ein unter umweltpolitischen Gesichtspunkten sehr nützliches Gerät.

Es ist bereits ein Groß-Gülle-Separator für stationären Betrieb bekannt geworden, der eine in einem Vorrichtungsgehäuse gelagerte Siebtrommel umfaßt. Über einen über den oberen Abschlußdeckel überstehenden trichterförmigen Einlaßbereich wird die mit Feststoffen versetzte Gülle zugeführt, und zwar auf einen oberen Ausschnittbereich der rotierenden Siebtrommel. Über innen und außen wechselweise sitzenden und zusammenwirkenden Andruckwalzen kann die Flüssigkeit durch die Siebtrommel nach unten hin ablaufen, während zwischen den Anpreßwalzen die Feststoffe hindurchgeführt und über eine nachfolgende Austragsrutsche nach außen hin abgegeben werden.

Bei Beschädigung oder Verschleiß der Siebtrommel oder in sonstigen, einen Ausbau der Siebtrommel erfordernden Fällen muß jedoch der gesamte Gülle-Separator weitgehend demontiert und zerlegt werden. Diese häufig mehrere Stunden erfordernden Arbeiten verlangen zum einen die Demontage der stirnseitig gegenüberliegenden Seitenwände, an denen die die eigentliche Siebtrommel tragenden und im Inneren davon verlaufenden und zusätzlich die von außen her auf den Außenumfang der Siebtrommel drückenden Druckwalzen gelagert sind. Erst nach der weiteren Demontage der Druckwalzen nach vorhergehender Entfernung der Seitenwände kann dann die Siebtrommel herausgenommen, repariert, gereinigt etc. oder gegen eine neue Siebtrommel ersetzt werden, wobei der Zusammenbau wieder die umgekehrten zeitintensiven Montageschritte erfordert.

Aufgabe der vorliegenden Erfindung ist es von daher, eine Möglichkeit zu schaffen, die Demontage und Montage einer Siebtrommel gegenüber dem Stand der Technik deutlich zu vereinfachen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird auf verblüffende Art und Weise eine Möglichkeit geschaffen, die Montage und Demontage einer im Inneren des Flüssigkeits-Feststoff-Separators gelagerten Siebtrommel zu vereinfachen. Dazu ist vorgesehen, daß zumindest eine der stirnwandseitigen Wände, die in Stirnseitenansicht die Siebtrommel zumindest teilweise überdeckt, zwei- oder mehrgeteilt ist und neben gegebenenfalls völlig entfernbaren Gehäusewandteilen einen von der übrigen verbleibenden Gehäusewand trennbaren und in eine tieferliegende Position absenkbaren Gehäusewand-Zentralabschnitt aufweist, an der die die Siebtrommel tragenden, d.h. im Inneren der Siebtrommel verlaufenden Druckwalzen gehalten, gelagert und/oder abgestützt sind. An der gegenüberliegenden Gehäusewand sind die Druckwalzen einzeln oder zumindest mittelbar gemeinsam über eine Pendelaufhängung gelagert, so daß bei Absenkung des Gehäusewand-Zentralabschnittes und damit bei einseitiger Absenkung der innenliegenden Druckwalzen ein ausreichender Spalt zu dem verbleibenden oberen Gehäusewandabschnitt mit den daran unverändert gehaltenen weiteren von außen an die Siebtrommel drückenden Druckwalzen gebildet wird, um die Siebtrommel hierüber seitlich herauszuziehen. Ein Herausziehen der Siebtrommel in dieser Position ist selbst dann möglich, wenn die Siebtrommel mit einem stirnseitig vorgesehenen Ringflansch versehen ist, da in der abgesenkten Position die Siebtrommel um die Höhe des Ringflansches angehoben und über die abgesenkten innenliegenden Druckwalzen herausgezogen werden kann. Mit anderen Worten ist der Gehäusewand-Zentralabschnitt so geformt und weist eine solche Größe auf, daß er kleiner ist als Stirnseitenfläche der Siebtrommel. Gegebenenfalls sind weitere Gehäusewandteile vorgesehen, die vor der Montage und Demontage der Siebtrommel völlig entfernt werden können, so daß letztlich der eigentliche Gehäusewand-Zentralabschnitt von seiner Außenabmessung so klein ist, daß die Siebtrommel problemlos ohne Demontage der Druckwalzen über diesen Gehäusewand-Zentralabschnitt hinweg herausgezogen werden kann.

Da der Flüssigkeits-Feststoff-Separator unterhalb der Siebtrommel ein Auffangbecken für die Flüssigkeit aufweist und die unterhalb des Gehäusewand-Zentralabschnittes liegende Seitenbegrenzung des Auffangbeckens von der eigentlichen auch die Trennzone für die Flüssigkeits-Feststoff-Trennung umfassenden Gehäusewand in der Regel bereits getrennt ist, muß je nach Lage und Anordnung der Siebtrommel im Verhältnis zum Auffangbecken möglicherweise noch die zugehörige Seitenwand des Auffangbeckens vor der Montage und Demontage der Siebtrommel mitentfernt werden, wenn nämlich diese Auffangbecken-Seitenwand in Stirnseitenansicht der Siebtrommel die Siebtrommel auch noch teilweise überdeckt.

Weitere Vorteile, Einzelheiten und Merkmale der Erfindung ergeben sich nachfolgend aus dem anhand von Zeichnungen dargestellten Ausführungsbeispiel. Dabei zeigen im einzelnen:

Figur 1 : eine schematische Stirnseitenansicht des Flüssigkeits-Feststoff-Separators während eines Montage-/ Demontage-Schrittes;

Figur 2 : eine schematische Vertikallängsschnittdarstellung während der Demontage der Siebtrommel;

Figur 3 : eine auszugsweise vergrößert dargestellte Detaildarstellung der Siebtrommel.

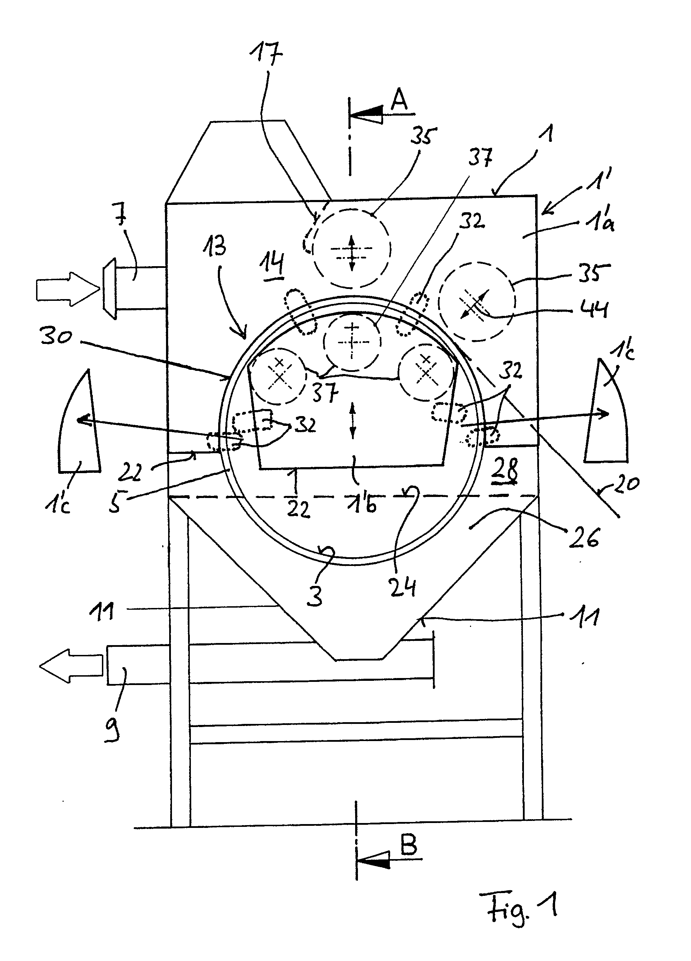

In den Zeichnungen ist in schematischer Darstellung, vor allem in vertikaler Schnittdarstellung, in paralleler Ansicht zur Längsachse einer Siebtrommel ein Flüssigkeits-Feststoff-Separator, nachfolgend auch kurz Gülle-Separator genannt, dargestellt. Er umfaßt im wesentlichen ein Vorrichtungsgehäuse 1 mit der im Inneren des Gehäuses gelagerten Siebtrommel 3, deren Axiallänge in etwa der Gesamtbreite des Vorrichtungsgehäuses 1, d.h. dem lichten Innenabstand zwischen den gegenüberliegenden Gehäuseinnenwänden entspricht. Damit der an sich gegebenenfalls scharfkantig auslaufende in Stirnseitenansicht kreisförmige Begrenzungsrand der Siebtrommel 3 sich nicht an der entsprechenden Innenwand des Vorrichtungsgehäuses 1 eingräbt und einarbeitet, kann die Siebtrommel 3 mit einem umlaufenden Ringflansch 5 versehen sein, wie dies in Figur 1 angedeutet ist.

Dadurch ergibt sich eine größere Auflagefläche an der entsprechenden Innenfläche der gegenüberliegenden Gehäusewände.

Zusätzlich können noch Gleitringe oder abschnittsweise wirksame Gleitstücke beispielsweise an der Gehäuseinnenwand vorgesehen sein, um einen abriebfreieren problemlosen Betrieb bei Anlage des Ringflansches 5 an den Gleitstücken zu gewährleisten.

Am Vorrichtungsgehäuse 1 ist ein Zulaufstutzen 7 und ein oben liegender Überlaufstutzen 29 vorgesehen. Die eigentliche auch die Trennzone 13 umfassende Flüssigkeits-Feststoff-Kammer 14 ist also durch die stirnseitig hintere bzw. vordere Gehäusewand 1', 1" sowie die den Zulaufstutzen 7 tragende längsseitige Gehäusewand und ein nachlaufendes Begrenzungsblech 17 im gezeigten Ausführungsbeispiel in Zusammenwirkung mit der auf die Siebtrommel 3 drückenden ersten äußeren Druckwalzen 35 sowie den entsprechenden verbleibenden Abschnitt des Mantels der umlaufenden Siebtrommel 3 begrenzt.

Die im Inneren der Siebtrommel vorgesehenen und diese eigentlich tragenden weiteren inneren Druckwalzen 37 sind, wie die beiden äußeren Druckwalzen 35, an denen gegenüberliegenden Gehäusewänden 1' und 1" gelagert.

Im Betrieb wird das Flüssigkeits-Feststoff-Gemisch über den Zulaufstutzen 7 in die Trennzone bzw. Trennkammer 13 eingeführt, wobei die Flüssigkeit durch die Siebtrommel 3 bis in ein unteres Auffangbecken 11 und über einen davon abgehenden Ablaufstutzen 9 abströmen kann. Bei zu starker Förderung kann der zuviel geförderte ungetrennte Anteil über den oberen Überlaufstutzen 29 in das das zu trennende Gemisch aufnehmende in den Zeichnungen nicht dargestellte Becken zurücklaufen.

Zwischen den zum Teil paarweise zusammenwirkenden inneren und äußeren Druckwalzen 35, 37 kann der am Siebtrommel-Mantel ausgepreßte Teil der Feststoffteile hindurchgeführt und über eine nach der in Figur 1 liegenden zweiten äußeren Druckwalze 35 angeordnete Austragsrutsche 20 abgeführt werden.

Aus der Zeichnung ist ersichtlich, daß die oberen auf die Trennzone bzw. Trennkammer 13 seitlich begrenzenden gegenüberliegenden Gehäusewände 1' und 1" in Stirnseitenansicht der Siebtrommel 3 etwas mehr als die Hälfte der Stirnseitenfläche der Siebtrommel 3 überdecken. Zwischen der unteren Kante 22 der gegenüberliegenden Gehäusewände 1' und 1" und der oberen Kante 24 der unteren Seitenbegrenzung 26 des Auffangbeckens 11 verbleibt ein Spalt 28.

Nachfolgend wird auf die Montage und Demontage der in der Zeichnung dargestellten Siebtrommel 3 näher eingegangen.

Wie aus der Stirnseitenansicht von Figur 1 ersichtlich ist, ist die eine der beiden gegenüberliegenden stirnseitigen Gehäusewände aus mehreren voneinander getrennten Wandabschnitten zusammengefügt. Die in Figur 1 in Frontdarstellung gezeigte Gehäusewand umfaßt einen feststehenden Gehäusewandabschnitt 1'a, der bei der Montage bzw. Demontage der Siebtrommel nicht abmontiert werden muß.

Über eine in Stirnseitenansicht der Kreisbogenform der Siebtrommel zumindest ansatzweise entsprechenden Trennlinie 30 ist gegenüber dem feststehenden Gehäuseabschnitt 1'a ein weiterer absenkbarer Gehäuseabschnitte 1'b vorgesehen, an welchem auch die inneren Druckwalzen 37 gelagert sind.

Da im gezeigten Ausführungsbeispiel die untere Kante 22 der Gehäusewand 1' unterhalb des Mittelpunktes der Siebtrommel liegt, sind ferner noch gegenüber dem absenkbaren Gehäuseabschnitt 1'b zwei gegenüberliegende seitlich vorgesehene völlig entfernbare Gehäuseabschnitte 1'c vorgesehen, die in Figur 1 bereits in demontiertem Zustand eingezeichnet sind.

Sowohl der absenkbare Gehäuseabschnitt wie die beiden in Figur 1 dargestellten entfernten seitlichen Gehäuseabschnitte 1'c sind gegeneinander über von außen aufgesetzt und die Trennlinien überbrückenden Metallbügel oder Metallaschen 32 überbrückt und über Schrauben gesichert, so daß nach Entfernung der Schrauben und der Metallbügel 32, wie in Figur 1 dargestellt, die seitlichen Gehäuseabschnitte 1'c völlig demontiert und entfernt und der mittlere, einen Gehäuse-Zentralabschnitt darstellenden Gehäuseabschnitt 1'b in die in Figur 1 dargestellte abgesenkte Position herabgeschwenkt werden kann.

Um dies zu ermöglichen, sind die inneren Druckwalzen 37 in der gegenüberliegenden feststehenden und nicht demontierten Gehäusewand 1" über Pendellager 34 gelagert, um die in den Figuren dargestellte einseitige Absenkbewegung zu ermöglichen.

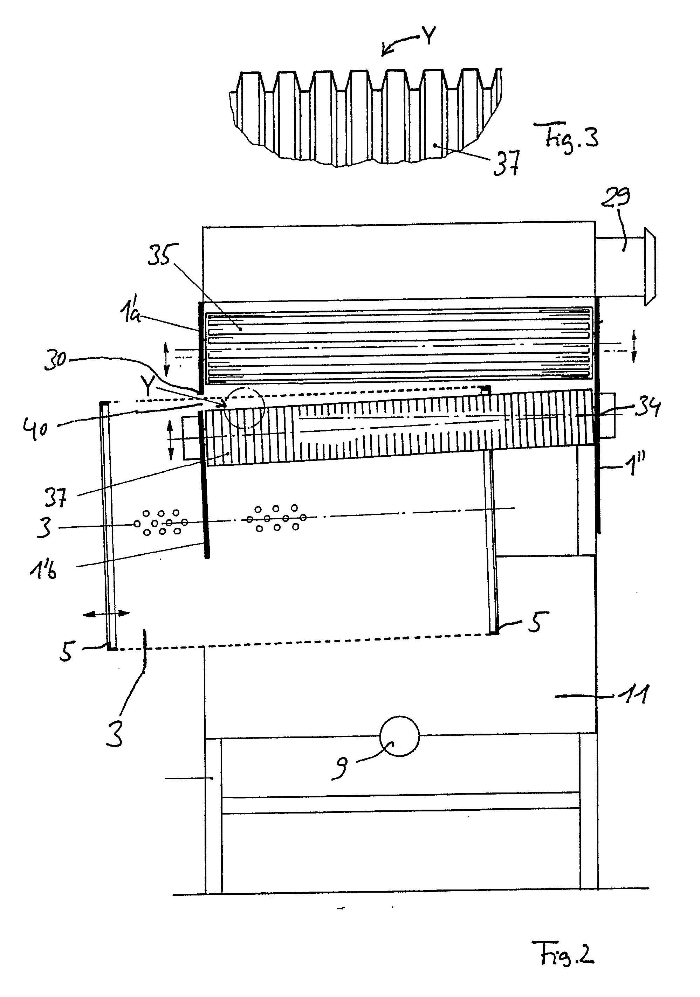

Wie dabei in der Darstellung gemäß Figur 1 und 2 ersichtlich ist, entsteht dann zwischen der bogenförmigen Trennlinie 30 des abgesenkten Gehäusewand-Zentralabschnittes 1'b und der gleich geformten bogenförmigen Kante des feststehenden Gehäuseabschnittes 1'a ein Spalt 40, über den hinweg die Siebtrommel nach außen hin abgezogen werden kann. Dieser Abziehvorgang ist deshalb unbehindert möglich, da die äußere Flächenbegrenzung des Gehäusewand-Zentralabschnittes 1'b deutlich kleiner ist als die innere Querschnittsfläche der Siebtrommel und auch kleiner ist als der lichte Innendurchmesser der Siebtrommel im Bereich des Ringflansches 5.

Im gezeigten Ausführungsbeispiel überdeckt die Seitenbegrenzung 26 des Auffangbeckens 11 auch noch den unteren Teil der Siebtrommel, so daß diese Seitenbegrenzung 26 an der gleichen Gehäusewandseite wie die einzelnen demontierbaren Gehäuseabschnitte vor Entfernung der Siebtrommel abgeschraubt und entfernt werden muß, wie dies in Figur 1 bereits erfolgt ist. In dem Falle, daß das Auffangbecken 11 und die zugehörige Seitenbegrenzung 26 beispielsweise auch aufgrund einer spezifischen Formgebung unter halb der Außenkontur der Siebtrommel liegt, kann auf eine derartige Demontage der Seitenbegrenzung 26 verzichtet werden.

Wie aus den Figuren auch ersichtlich ist, werden die äußeren Druckwalzen 35 an beiden gegenüberliegenden Gehäusestirnwänden an den nicht demontierten feststehenden Gehäuseabschnitten 1'a gehalten und gelagert, so daß hier eine Demontage nicht erforderlich ist.

Der Einbau der Siebtrommel erfolgt in umgekehrter Weise, wobei nach dem Aufschieben der absenkbare Gehäusewand-Zentralabschnitt wieder angehoben und über die in Figur 1 lediglich strichliert gezeigten Bügel oder Laschen 32 am feststehenden oberen Gehäusewandabschnitt 1'a angebracht und verankert werden. Vor oder danach können auch noch die in Figur 1 bereits völlig entfernten seitlichen Gehäusewandabschnitte 1'c über weitere Laschen befestigt werden, wobei die Lage der Bügel oder Laschen 32 in Figur 1 lediglich strichliert angegeben sind.

Schließlich wird die Seitenbegrenzung 26 für das Auffangbecken 11 wieder montiert.

Sollte im Falle einer anderen Konstruktion die untere Kante 22 der oberen Gehäusewand 1' oberhalb des Mittelpunktes der Siebtrommel 3 liegen, so kann unter Umständen auf die seitlich entfernbaren Gehäusewandabschnitte 1'c verzichtet werden. Denn in diesem Falle ist die Breite des absenkbaren Gehäusewand-Zentralabschnittes 1'b geringer als der lichte Innendurchmesser der Siebtrommel, so daß in demontierter Lage ein Abziehen auch bei dieser Konstruktion möglich ist.

Abweichend vom gezeigten Ausführungsbeispiel könnte es eventuell auch genügen, nur einen seitlich entfernbaren Gehäusewandabschnitt 1'c vorzusehen, da nach Entfernung lediglich eines seitlichen entfernbaren Gehäusewandabschnittes 1'c der verbleibende Gehäusewand-Zentralabschnitt 1'b in seiner abgesenkten Lage auch gleichzeitig so seitlich verschoben werden kann, daß die Siebtrommel 3 problemlos abgezogen oder aufgeschoben werden kann.

Um das Prinzip der Montage und Demontage der Siebtrommel vereinfacht darzustellen, ist die spezifische Lagerung vor allem der äußeren Druckwalzen 35 und deren Vorspannung entsprechend den Pfeilen 44 auf die Außenseite der Siebtrommel sowie deren Antrieb im einzelnen nicht näher dargestellt.

Abweichend vom gezeigten Ausführungsbeispiel kann natürlich der Zulaufstutzen beispielsweise auch tieferliegend quasi von unten her in die Vorrichtung zur Trennzone führend angeordnet sein. In jedem Falle ist zur Begrenzung der Trennkammer einmal in Umlaufrichtung der Siebtrommel, aber auch in Gegenrichtung eine Dichtung bewirkende Begrenzungsbleche, beispielsweise vergleichbar dem oberen Begrenzungsblech 17 vorgesehen. Eine eventuell nicht näher dargestellte Federstahl-Zunge im Einführbereich des Zulaufrohres kann an dem Mantel der Siebtrommel anliegen und eine Begrenzung der Trennkammer entgegengesetzt zur Rotationsrichtung der Siebtrommel darstellen. Derartige auch am Mantel der Siebtrommel anliegende Federzungen, Federbleche etc., wie beispielsweise auch ein Feststoffschaber im Bereich der Austragsrutsche zum Abheben der Feststoffanteile vom Siebtrommelmantel beeinträchtigen weder den Ein- noch den Ausbau der Siebtrommel in der oben erläuterten Weise.

**Ansprüche**

1. Flüssigkeits-Feststoff-Separator, insbesondere Gülleseparator mit einer in Umfangsrichtung antreibbaren Siebtrommel (3), einer Trennkammer für das zu separierende Flüssigkeits-Feststoff-Gemisch, wobei zumindest eine Begrenzungsfläche der Trennkammer und damit die eigentliche Trennzone durch einen Ausschnitt des Mantels der Siebtrommel (3) gebildet ist, und mit Druckwalzen (35, 37) zur Lagerung der Siebtrommel (3) und zur unterstützenden Trennung des Feststoff-Flüssigkeits-Gemisches unter gleichzeitigem Abrollen auf dem Mantel der Siebtrommel (3) zwischen den inneren, die Siebtrommel (3) tragenden und den äußeren, von außen her auf den Mantel der Siebtrommel (3) drückenden Druckwalzen (35, 37) hindurchbewegbar ist, **dadurch gekennzeichnet,** daß auf der einen walzenstirnseitigen Gehäusewand (1") die inneren Druckwalzen (37) zumindest mittelbar verschwenkbar abgestützt sind, und daß die gegenüberliegende walzenstirnseitige Gehäusewand (1') längs einer Trennlinie (30) zumindest zweigeteilt ist und zumindest einen gegenüber dem verbleibenden feststehenden Gehäusewand-Abschnitt (1'a) lösbaren und absenkbaren Gehäusewand-Zentralabschnitt (1'b) umfaßt, auf welchem lediglich die inneren Druckwalzen (37) gehalten und abgestützt sind, während die äußeren Druckwalzen (35) an dem feststehenden Gehäusewandabschnitt (1'a) gelagert sind, und daß der absenkbare Gehäusewand-Zentralabschnitt (1'b) bei ansonsten siebtrommelstirnseitigem freien Zugang oder Entfernung weiterer Gehäusewandteile in gelöster Stellung mit den darauf gelagerten inneren Druckwalzen (37) derart absenkbar und gegenüber der gegenüberliegenden Gehäusestirnwand derart absenk- und kippbar ist, daß die Siebtrommel (3) über die inneren Druckwalzen (37) und dem abgesenkten Gehäusewand-Zentralabschnitt (1'b) abzieh- bzw. aufschiebbar ist.

2. Flüssigkeits-Feststoff-Separator nach Anspruch 1, **dadurch gekennzeichnet,** daß die inneren Druckwalzen (37) an der undemontierten Gehäusestirnwand (1") einzeln oder gemeinsam über eine gelenkige oder Pendelverbindung abgestützt sind.

3. Flüssigkeits-Feststoff-Separator nach Anspruch 1 oder 2, **dadurch gekennzeichnet,** daß die inneren Druckwalzen (37) an der hinteren feststehenden Gehäusewand (1") einzeln über ein Pendel-, sphärisches oder kardanisches Lager gelagert sind.

4. Flüssigkeits-Feststoff-Separator nach einem der Ansprüche 1 bis 3, **dadurch gekennzeichnet,** daß insbesondere bei die Siebtrommel (3) in Stirnseitenansicht unterhalb deren Mittelpunkt liegender sekantenförmiger Gehäusewandabschlußkante (22) zumindest zwei gegenüber dem feststehenden verbleibenden Gehäusewandabschnitt (1'a) lösbare Gehäusewandabschnitte (1'b, 1'c) vorgesehen sind.

5. Flüssigkeits-Feststoff-Separator nach einem der Ansprüche 1 bis 3, **dadurch gekennzeichnet,** daß lediglich ein lösbarer und absenkbarer Gehäusewandabschnitt (1'b) vorgesehen ist, der alle zugehörigen inneren Druckwalzen (37) abstützt und lagert.

6. Flüssigkeits-Feststoff-Separator nach einem der Ansprüche 1 bis 4, **dadurch gekennzeichnet,** daß ein absenkbarer Gehäusewand-Zentralabschnitt (1'b) alle zugehörigen inneren Druckwalzen (37) an ihrem einen Walzenende lagert, das zumindest zwei weitere bevorzugt seitlich zum Gehäusewand-Zentralabschnitt (1'b) liegende völlig entfernbare Gehäusewandabschnitt (1'c) vorgesehen sind.

7. Flüssigkeits-Feststoff-Separator nach einem der Ansprüche 1 bis 6, **dadurch gekennzeichnet,** daß der absenkbare Gehäusewandabschnitt (1'b) sowie zumindest ein gegebenenfalls weiter vorgesehener völlig entfernbarer Gehäusewandabschnitt (1'c) über eine gemeinsame bogenförmige Trennlinie (30) von dem verbleibenden feststehenden Gehäusewandabschnitt (1'a) getrennt sind, dessen Bogenkrümmung und -lage an die Bogenkrümmung und zur -lage der Siebtrommel (3) in zumindest ansatzweiser deckungsgleicher Lage in Stirnseitenansicht ausgerichtet sind.

8. Flüssigkeits-Feststoff-Separator nach einem der Ansprüche 1 bis 3, **dadurch gekennzeichnet,** daß insbesondere bei einer die Siebtrommel (3) oberhalb deren Mittelpunkt sekantenförmig schneidender unterer Gehäuseabschlußkante (22) abgesehen von einer möglichen weiteren demontierten Seitenbegrenzung (26) für ein untenliegendes Auffangbecken (11) lediglich ein absenkbarer und von dem verbleibenden feststehenden Gehäusewandabschnitt (1'a) lösbarer Gehäusewandabschnitt (1'b) vorgesehen ist.

9. Flüssigkeits-Feststoff-Separator nach einem der Ansprüche 1 bis 8, **dadurch gekennzeichnet,** daß auch eine untere die Siebtrommel (3) in Stirnseitenansicht gegebenenfalls zumindest teilweise überdeckenden Seitenbegrenzung (26) für ein Ablaufbecken (11) entfernbar ist.

10. Flüssigkeits-Feststoff-Separator nach Anspruch 9, **dadurch gekennzeichnet,** daß die Seitenbegrenzung (26) für das untere Ablaufbecken (11) über einen Spalt (40) von der Gehäuseunterkante (22) der darüber liegenden Gehäusewand (1'a) getrennt ist.

11. Flüssigkeits-Feststoff-Separator nach einem der Ansprüche 1 bis 10, **dadurch gekennzeichnet,** daß der absenkbare Gehäusewand-Zentralabschnitt (1'b) bei entfernten Gehäusewandabschnitten (1'c) an den verbleibenden geraden Umlauf- und Begrenzungskanten rechteck- bis trapezförmig gestaltet ist.

Fig. 1

Fig.3

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-5 961 39 (L. HERTENBEIN)<br>* Seite 2, Zeilen 28-34; Seiten 1-3 *<br>– – – | 1-11 | B 01<br>D 33/073<br>B 01 D 33/46 |
| A | DE-A-2 063 345 (L.J.H. NORWICH)<br>* Seiten 5-16 *<br>– – – | 1-11 | B 01 D 33/64 |
| A | DE-A-2 743 556 (CARBORUNDUM)<br>* Seiten 7-11 *<br>– – – | 1-11 | |
| A | US-A-4 226 715 (K.W. NIEDERER)<br>* Spalte 3, Zeilen 35-68; Spalten 4-16 *<br>– – – – | 1-11 | |
| | | | **RECHERCHIERTE SACHGEBIETE (Int. Cl.5)**<br><br>B 01 D |

Der vorliegende Recherchenbericht wurde für alle Patentansprüche erstellt

| Recherchenort | Abschlußdatum der Recherche | Prüfer |
|---|---|---|
| Den Haag | 03 April 91 | DE PAEPE P.F.J. |